# DEMANDE DE BREVET EUROPEEN

(11) **EP 0 628 377 A1**
(43) Date de publication de la demande: **14.12.1994**
(21) Numéro de dépôt: 94401212.9
(22) Date de dépôt: 02.06.1994
(51) Int. Cl.: B23K 26/14

(54) **Procédé de soudage d'aciers alliés ou non alliés par laser continu au CO2 sous gaz de protection**

(30) Priorité: 14.06.1993 FR 9307146
(71) Demandeur: L'AIR LIQUIDE, SOCIETE ANONYME POUR L'ETUDE ET L'EXPLOITATION DES PROCEDES GEORGES CLAUDE, F-75321 Paris Cédex 07 (FR)
(72) Inventeur: Marchand, Didier, F-92400 Courbevoie (FR); Le Gall, Christian, F-95610 Eragny sur Oise (FR)
(74) Mandataire: Caen, Thierry Alain

(57) **Abrégé**

L'invention concerne un procédé de soudage d'aciers alliés ou non alliés par laser continu au CO₂ comprenant le soufflage d'un gaz de protection afin de protéger le métal en fusion de l'action de l'air, caractérisé en ce que ledit gaz de protection est un mélange d'hélium et d'argon comprenant 18 à 55% en volume d'hélium par rapport au volume total d'hélium et d'argon.

Utilisation pour le soudage de tous types d'aciers.

## Description

L'invention concerne un procédé de soudage d'aciers alliés ou non alliés par laser continu au CO₂ sous gaz de protection constitué d'un mélange d'argon et d'hélium dans certaines proportions.

Le procédé de soudage par laser au CO₂ repose sur la haute densité de puissance du faisceau laser focalisé par une optique de focalisation, lentille ou miroir, sur un matériau à souder. Un gaz de protection est normalement utilisé afin de protéger le métal en fusion. Ce gaz peut être soufflé au travers d'une buse dans la même direction que le faisceau laser ou/et par une buse faisant un angle par rapport au faisceau. Sous l'effet de la haute densité de puissance, le matériau à souder est volatilisé, il se forme une cavité fine et profonde appelée "trou de serrure". Le nuage de vapeur métallique est ionisé par la densité de puissance du faisceau et forme un plasma. Ce plasma peut éventuellement engendrer un plasma du gaz de protection. Le plasma résultant est néfaste à la bonne marche du procédé car il absorbe une importante part de la puissance du laser au CO₂, limitant ainsi les performances du procédé (vitesse de soudage, épaisseur soudée).

Certains gaz de protection usuels sont très plasmagènes et provoquent dans certaines conditions un plasma très absorbant, pouvant aller jusqu'à l'occultation complète du faisceau. L'argon avec son faible potentiel d'ionisation (15,68 eV) présente cet inconvénient.

Par contre, l'hélium, qui a un potentiel d'ionisation élevé (26,46 eV) et une conductibilité thermique élevée convient très bien comme gaz de protection pour le soudage laser au CO₂ dans le but de minimiser l'effet plasma.

Cependant, l'hélium, gaz léger, n'assure pas toujours une bonne couverture du bain de métal en fusion et provoque une émission de fumées plus importantes que l'argon.

Il existe un besoin pour un procédé de soudage par laser au CO₂ utilisant un gaz de protection qui permettrait des performances semblables à l'hélium mais assurerait une meilleure couverture gazeuse de la soudure.

La présente invention vise à fournir un tel procédé.

Plus précisément, l'invention concerne un procédé de soudage d'aciers alliés ou non alliés par laser continu au CO₂ comprenant le soufflage d'un gaz de protection afin de protéger le métal en fusion de l'action de l'air, caractérisé en ce que ledit gaz de protection est un mélange d'hélium et d'argon comprenant 18 à 55% en volume d'hélium par rapport au volume total d'hélium et d'argon.

A partir de 18% en volume d'hélium, le risque de formation d'un plasma absorbant totalement le faisceau laser est fortement diminué. Il n'y a par contre pas d'avantages à dépasser une teneur en He excédant 55% en volume et, en fait, à partir de 28% en volume d'hélium, on obtient pratiquement les performances de l'hélium pur, en ce qui concerne la vitesse de soudage.

De préférence, le gaz de protection comprend 25 à 35% en volume d'hélium.

Le procédé de l'invention permet le soudage continu de tous types d'aciers, y compris d'aciers non alliés, d'acier faiblement alliés et d'aciers fortement alliés, en des épaisseurs supérieures à 2 mm avec des lasers d'une puissance supérieure à 1500 W.

Le débit du gaz de protection peut aller, par exemple, de 10 à 30 litres/minute.

Le mélange gazeux utilisé selon l'invention assure un couplage correct du faisceau laser avec le matériau à souder, en minimisant la formation du plasma.

A titre d'exemples non limitatifs on a testé divers mélanges He/Ar, ainsi que l'argon pur et l'hélium pur à titre de témoins, dans des opérations de soudage par laser continu au CO₂ en utilisant le matériel et les conditions opératoires ci-après.
. Puissance du laser au CO₂ : 5000 W (émission continue)
. Mode du faisceau : TEM 20
. Focalisation par miroir parabolique de longueur focale 150 mm
. Position du point de focalisation à l'intérieur de la tôle optimisée pour chaque gaz, afin d'obtenir la vitesse de soudage maximale (environ 1 mm sous la surface supérieure de la tôle pour l'argon, environ 2 mm pour l'hélium et les mélanges)
. Débit de gaz : 20 l/min
. Gaz soufflé dans la direction du faisceau
. Diamètre de buse : 4 mm
. Distance buse - matière à souder : 5 mm
. Acier inoxydable Z2CN18 - 10 ou AISI304L
. Epaisseur soudée : 5 mm
. Soudage bord à bord (sans métal d'apport)

Le tableau ci-dessous donne les vitesses de soudage permettant d'obtenir un soudage sur toute l'épaisseur de la tôle :

| Gaz protecteur | Vitesse de soudage, mètres/minute |
|---|---|
| argon (témoin) | 1,5 |
| 10% He/90% Ar (comparatif) | 1,7 |
| 20% He/80% Ar | 1,8 |
| 30% He/70% Ar | 2,0 |
| 50% He/50% Ar | 2,0 |
| He (témoin) | 2,0 |

A part ces résultats concernant la vitesse de soudage, les essais réalisés ont mis en évidence un meilleur mouillage avec les mélanges contenant de l'argon par rapport au résultat obtenu sous hélium. Le cordon est moins bombé.

Toujours par rapport à l'hélium, les essais ont montré que le dépôt de fumée sur le cordon de soudage est moins important avec les mélanges He/Ar utilisés dans l'invention.

## Revendications

1. Un procédé de soudage d'aciers alliés ou non alliés par laser continu au CO₂ comprenant le soufflage d'un gaz de protection afin de protéger le métal en fusion de l'action de l'air, caractérisé en ce que ledit gaz de protection est un mélange d'hélium et d'argon comprenant 18 à 55% en volume d'hélium par rapport au volume total d'hélium et d'argon.

2. Un procédé selon la revendication 1, caractérisé en ce que le gaz de protection comprend 25 à 35% en volume d'hélium.
